# EUROPÄISCHE PATENTSCHRIFT

(11) **EP 2 850 330 B1**
(45) Veröffentlichungstag und Bekanntmachung des Hinweises auf die Patenterteilung: **31.10.2018**
(21) Anmeldenummer: 13723695.6
(22) Anmeldetag: 30.04.2013
(51) Int. Cl.: F16C 33/20, F16C 33/28, C08K 3/30, C08K 3/34

(54) **GLEITLAGERVERBUNDWERKSTOFF**
SLIDING BEARING COMPOSITE MATERIAL
MATÉRIAU COMPOSITE DE PALIER LISSE

(30) Priorität: 18.05.2012 DE 102012208346
(43) Veröffentlichungstag der Anmeldung: 25.03.2015
(73) Patentinhaber: KS Gleitlager GmbH, 68789 St. Leon-Rot (DE)
(72) Erfinder: PASTERNAK, Axel, 76669 Bad Schönborn (DE); REINICKE, Dr. Rolf, 76669 Bad Schönborn (DE); BICKLE, Ruediger, 68799 Reilingen (DE); SCHMID, Andreas, 71116 Gärtringen (DE); RICHTER, Frank, 72800 Eningen unter Achalm (DE); STECK, Corina, 72127 Kusterdingen (DE)
(74) Vertreter: DREISS Patentanwälte PartG mbB
(86) Internationale Anmeldenummer: PCT/EP2013/058965
(87) Internationale Veröffentlichungsnummer: WO 2013/171063

(56) Entgegenhaltungen:
- EP-A1- 1 647 574
- EP-A2- 0 938 970
- DE-A1- 4 200 385
- DE-A1- 19 524 968
- DE-A1- 19 545 425
- DE-A1-102010 028 541
- DE-C1- 4 430 474
- US-A- 5 616 406

## Beschreibung

Die Erfindung betrifft einen Gleitlagerverbundwerkstoff mit einer Stützschicht, optional mit einer porösen Trägerschicht, insbesondere aus Bronze, und mit einem Gleitschichtmaterial aus einem matrixbildenden thermoplastischen Kunststoffmaterial und darin aufgenommenen Füllstoffen. Ein solcher Gleitlagerverbundwerkstoff mit Polyamid als thermoplastischem Kunststoffmaterial ist bekannt aus DE 195 45 425 A1, das die Merkmale des Oberbegriffs des Anspruchs 1 offenbart.

US 5,616,406 offenbart einen Gleitlagerverbundwerkstoff mit PTFE als matrixbildendem thermoplastischem Kunststoffmaterial, wobei das Kunststoffmaterial weiter 5-30 Gew.-% Wollastonit, 1-15 Gew.-% Calciumpyrophosphat oder Caldiumhydrogenphosphat und 1-20 Gew.-% Bariumphosphat als Füllstoffe umfasst.

Gleitlagerverbundwerkstoffe und hieraus hergestellte Gleitlager mit einer Stützschicht und einer Kunststoffgleitschicht sind insbesondere bei Kraftfahrzeuganwendungen vorbekannt und üblich. Sie werden eingesetzt, um Wellen oder Wellenzapfen in einer zylindrischen oder buchsenförmigen, insbesondere bundbuchsenförmigen Lagerstelle zu lagern. Sie finden aber auch Anwendung bei sphärisch ausgebildeten Lageranordnungen. Typischerweise werden Gleitlagerverbundwerkstoffe endlos hergestellt, so dass ein aufrollbares Flachmaterialband gebildet wird. Zur Herstellung der Gleitlagerelemente werden von einem endlos zugeführten Flachmaterialband des Gleitlagerverbundwerkstoffs Platinenabschnitte abgelängt und dann auf Buchsen- oder Schalenform verformt, wobei typischerweise buchsenförmige Gleitlagerelemente mit einer Stoßfuge gebildet werden, die beim Einpressen der Gleitlagerelemente in eine Lageraufnahme im wesentlichen wenigstens nahezu geschlossen wird.

Bei den in der thermoplastischen Matrix des Gleitschichtmaterials aufgenommenen Füllstoffen handelt es sich um tribologisch wirksame Stoffe, die sowohl tragende und verschleißmindernde Eigenschaften als auch schmierende Eigenschaften haben.

Das Gleitschichtmaterial kann flächenhaft auf die Stützschicht, die insbesondere aus Stahl oder Aluminium gebildet sein kann, aufgebracht werden; beispielsweise könnte sie auflaminiert, aufgegossen oder aufgespritzt werden. Es kann aber auch eine dreidimensional poröse Trägerschicht zum Einsatz kommen, die beispielsweise auf die Stützschicht porös aufgesintert ist, wobei solchenfalls das Gleitschichtmaterial samt Füllstoffen von der dem späteren Gleitpartner zugewandten Seite her in die offenporige poröse Trägerschicht einimprägniert wird und so besser gehalten werden kann. Sie bildet dabei typischerweise einen Überstand über das Material der Trägerschicht von vorzugsweise 50 - 500 µm.

Der vorliegenden Erfindung liegt die Aufgabe zugrunde, einen Gleitlagerverbundwerkstoff der eingangs genannten Art im Hinblick auf das Tragvermögen des Gleitschichtmaterials weiter zu verbessern.

Diese Aufgabe wird durch einen Gleitlagerverbundwerkstoff mit den Merkmalen des Anspruchs 1 gelöst.

Mit der vorliegenden Erfindung wurde zum einen erkannt, dass sich ein mineralischer Füllstoff in der Form von Wollastonit, also Calciumsilikat, CaSiO₃, oder genauer Ca₃[Si₃O₉], in der beanspruchten Menge in tribologischer Hinsicht als besonders vorteilhaft erweist und dass besonders das Zusammenwirken von Wollastonit mit einem Metallsulfid die tribologischen Eigenschaften des Gleitlagerverbundwerkstoffs insbesondere im Hinblick auf das Tragvermögen in unerwarteter Weise positiv zu beeinflussen vermag.

Bei einer bevorzugten Ausführungsform des erfindungsgemäßen Gleitlagerverbundwerkstoffs beträgt der Anteil von Wollastonit an dem Gleitschichtmaterial 1 - 30 Vol.-% und insbesondere 2 - 25 Vol.-%.

Der weitere Füllstoff aus der Klasse der Metallsulfide kann vorteilhafterweise Molybdändisulfid (MoS₂), Wolframdisulfid (WS₂), Kupfersulfid (CuS) und/oder Zinksulfid (ZnS) umfassen.

Nach einer bevorzugten Ausführungsform des erfindungsgemäßen Gleitlagerverbundwerkstoffs beträgt der Anteil des weiteren Füllstoffs aus der Klasse der Metallsulfide an dem Gleitschichtmaterial 0,5 - 20 Vol.-%, insbesondere 0,5 - 15 Vol.-%, insbesondere 0,5 - 10 Vol.-%, insbesondere 0,5 - 5 Vol.-%.

Weiter kann es sich als vorteilhaft erweisen, wenn außerdem tribologisch wirksame Füllstoffe ausgewählt aus PTFE, Graphit, keramischen Stoffen, wie insbesondere hexagonalem Bornitrid oder Titandioxid, Kohlenstofffasern, Aramidfasern, Aramidpulver, Bariumsulfat in dem Gleitschichtmaterial enthalten sind.

Vorzugsweise wird der Anteil aller Füllstoffe einschließlich des Wollastonit-Anteils auf höchstens 50 Vol.-% beschränkt.

Bei einer Ausführungsform ist das thermoplastische Kunststoffmaterial überwiegend von PPA gebildet, d. h. der Anteil des PPA an dem thermoplastischen Kunststoffmaterial beträgt vorzugsweise wenigstens 50 Vol.-%,

insbesondere wenigstens 60 Vol.-%, insbesondere wenigstens 70 Vol.-% und weiter insbesondere wenigstens 80 Vol.-%. Ein solcher Gleitlagerverbundwerkstoff hat sich im Hinblick auf eine große Anzahl von Anwendungen im Zusammenhang mit Wollastonit als vorteilhaft erwiesen. Eine thermoplastische Matrix aus überwiegend PPA zeigt zwar nicht die Hochtemperaturbeständigkeit eines Werkstoffs mit einer Matrix aus PEEK, liegt aber dennoch deutlich oberhalb der Beanspruchbarkeit von PVDFbasierten Kunststoffgleitschichten.

Bei einer weiteren besonders bevorzugten Ausführungsform umfasst das Gleitschichtmaterial PPA und als Metallsulfid Wolframdisulfid oder Molybdändisulfid. Die bevorzugte Zusammensetzung des Gleitschichtmaterials beträgt insbesondere 70 - 94 Vol.-% PPA, 5 - 25 Vol.-% Wollastonit und 0,5 - 10 Vol.-% WS₂ oder MoS₂

Nach einem weiteren an sich selbständigen Erfindungsgedanken wird vorgeschlagen, dass der Wollastonit zu mehr als der Hälfte, insbesondere zu wenigstens 60 Vol.-% insbesondere zu wenigstens 70 Vol.-% und weiter insbesondere zu wenigstens 80 Vol.-% seines Anteils in nadelförmiger Modifikation enthalten ist. Es wurde festgestellt, dass bei Verwendung von Wollastonit in nadelförmiger Modifikation die Tragfähigkeit des erfindungsgemäßen Gleitlagerverbundwerkstoffs weiter verbessert werden kann.

Beispielsweise ist Wollastonit in seiner nadelförmigen Modifikation als TREMIN® 939-600 AST und in seiner block- oder granulatförmigen Modifikation als TREMIN® 283-800 AST von Quarzwerke GmbH, Frechen, Deutschland, erhältlich.

Dieser nadelförmige Wollastonit lässt sich wie folgt charakterisieren: Mittlere Nadellänge L₅₀ = 21 µm (L₉₀ = 49 µm ; L₁₀ = 9 µm). Dieser nadelförmige Wollastonit ist mit Aminosilan oberflächenbehandelt. Der granulatförmige Wollastonit weist einen D₉₅-Wert von 8 µm und einen D₅₀-Wert von 25 µm auf.

Wollastonit in seiner nadelförmigen Konfiguration ist dabei dahingehend definiert, dass eine Abmessung c eines Wollastonit-Partikels wenigstens das vierfache, insbesondere das fünffache zweier weiterer Abmessungen a und b beträgt. Unter einer plättchenförmigen Konfiguration ist eine Dimension a kleiner als das 0,3-fache der übrigen Dimensionen b und c, wobei die Abmessung b/c zwischen 0,7 - 1,3 liegt. Granularer oder blockförmiger Wollastonit hingegen umfasst Partikel, deren drei Abmessungen a, b und c jeweils zueinander, also a/b und a/c bzw. b/c zwischen 0,7 - 1,3 liegt. Die vorgenannten Dimensionen a, b, c sind dabei entlang von senkrecht aufeinander stehender Achsen gemessen.

Gegenstand der Erfindung ist des weiteren ein Gleitlager zur Aufnahme eines wellen- oder zapfenförmigen Gleitpartners, welches aus einem erfindungsgemäßen Gleitlagerverbundwerkstoff hergestellt, insbesondere in einem Biege-Rollprozess hergestellt wurde.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Gleitlagerverbundwerkstoffs. In der Zeichnung zeigt:
Figur 1 eine schematische Schnittansicht eines erfindungsgemäßen Gleitlagerverbundwerkstoffs;
Figur 2 das Ergebnis von Verschleißprüfungen an verschiedenen Gleitlagerverbundwerkstoffen;
Figur 3 das Ergebnis von Reibwertprüfungen an verschiedenen Gleitlagerverbundwerkstoffen; und
Figur 4 a,b,c eine schematische Darstellung (nicht maßstabsgetreu) zur Einteilung des Wollastonit in verschiedene Modifikationen.

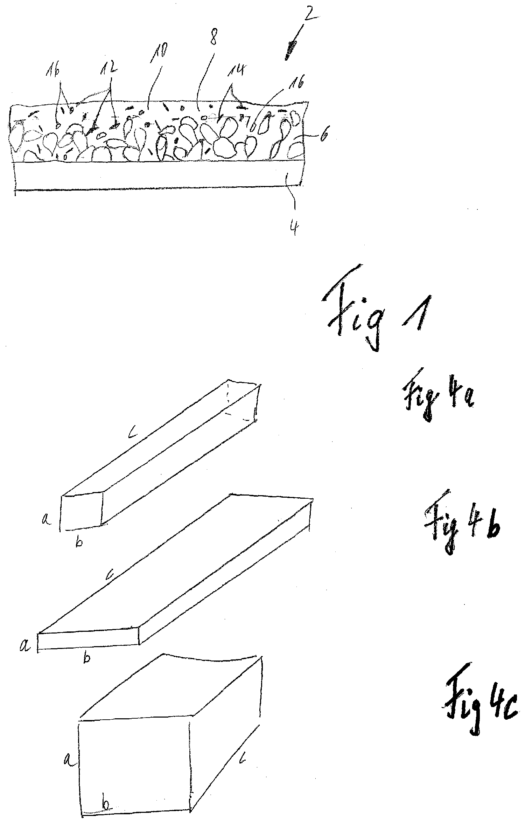

Der in Figur 1 dargestellte Gleitlagerverbundwerkstoff 2 umfasst eine metallische Stützschicht 4, insbesondere aus Stahl, und eine (optionale) poröse Trägerschicht 6, insbesondere aus Bronze, bei der es sich insbesondere um eine aufgesinterte Schicht handelt, sowie ein Gleitschichtmaterial 8 aus einem matrixbildenden Kunststoffmaterial 10 und darin aufgenommenen Füllstoffen 12. Die Füllstoffe 12 umfassen erfindungsgemäß Wollastonit 14 und Metallsulfide 16.

Der Wollastonit liegt in einem Anteil von 1 bis 40 Vol.-% und der weitere Füllstoff in Form von Metallsulfid in einem Anteil von 1 bis 30 Vol.-% jeweils bezogen auf das Gleitschichtmaterial 8 vor.

Der Wollastonit 14 liegt vorzugsweise zu mehr als der Hälfte seines Anteils in nadelförmiger Modifikation vor, wie sie eingangs beschrieben wurde. Es kann sich auch als vorteilhaft erweisen, wenn ein größerer Anteil des Wollastonit in nadelförmiger Modifikation und ein kleinerer Anteil des Wollastonit in granularer oder blockförmiger Modifikation vorliegt. Der Anteil des nadelförmigen Wollastonit beträgt dabei vorteilhafterweise das 3- bis 5-Fache des Anteils des granularen Wollastonit.

Figur 4a, b, c zeigt eine rein schematische nicht maßstabsgetreue Darstellung zur Einteilung des Wollastonit in verschiedene Modifikationen anhand von Verhältnisbereichen von aufeinander senkrecht stehenden Abmessungen a, b, c, wie dies an früherer Stelle angegeben wurde.

Bei einer bevorzugten Ausführungsform des erfindungsgemäßen Gleitlagerverbundwerkstoffs ist das thermoplastische Kunststoffmaterial oder Polymer von PPA gebildet. Für die nachfolgenden Prüfungen wurde PPA der Handelsmarke VESTAMID® Htplus M1000 natur, erhältlich von EVONIK Degussa GmbH, Essen, Deutschland, als matrixbildendes thermoplastisches Polymer verwendet. Als mineralischer Füllstoff wurde Wollastonit in nadelförmiger sowie in granularer Modifikation der eingangs beschriebenen Art verwendet. Als bevorzugte Füllstoffe aus der Klasse der Metallsulfide wurde Molybdändisulfid und Wolframdisulfid verwendet.

Die folgenden Gleitlagerverbundwerkstoffe wurden hergestellt, und hieraus wurden gerollte Buchsen für Vergleichsprüfungen gefertigt. Die Gleitlagerverbundwerkstoffe umfassen gleichermaßen den im Zusammenhang mit Figur 1 beschriebenen Aufbau, wobei der Überstand des Gleitschichtmaterials 10 über der porösen Trägerschicht 6 etwa 150 µm beträgt. Als Füllstoffe aus der Klasse der Metallsulfide wurde WS₂ verwendet. Die Zusammensetzung des Gleitschichtmaterials war wie folgt:
Beispiel 1:
   90 Vol.-% PPA
   10 Vol.-% Wollastonit in nadelförmiger Modifikation
Beispiel 2:
   89 Vol.-% PPA
   10 Vol.-% Wollastonit in nadelförmiger Modifikation
   1 Vol.-% WS₂
Beispiel 3:
   89 Vol.-% PPA
   5 Vol.-% Wollastonit in nadelförmiger Modifikation
   5 Vol.-% Wollastonit in granularer Modifikation
   1 Vol.-% WS₂
Vergleichsbeispiel 4:
   75 Vol.-% PEEK
   10 Vol.-% Kohlenstofffasern
   7 Vol.-% Graphit
   4 Vol.-% ZnS
   4 Vol.-% TiO₂

### Es wurden die folgenden Vergleichsmessungen ausgeführt:

Verschleißprüfung auf einem Lagerprüfstand: Die gerollten Buchsen aus Gleitlagerverbundwerkstoff mit einer Breite von 20 mm und einem Innendurchmesser von 30 mm sind in einen Buchsenaufnahmekörper eingepresst. Sie laufen gegenüber einer Welle aus Stahl. Über den Buchsenaufnahmekörper kann eine Last senkrecht zur Welle vorgegeben bzw. variiert werden. Die Prüfparameter sind:
Gleitgeschwindigkeit: 0,16 m/sec
Temperatur: 30° C
Medienschmierung: V-Öl
Öldruck: 2 bar (wird über Buchsenaufnahmekörper zugeführt)
Laststeigerung in 0,6 kN-Schritten bis maximale Last von 30 kN
Haltezeit: 900 sec/Stufe.

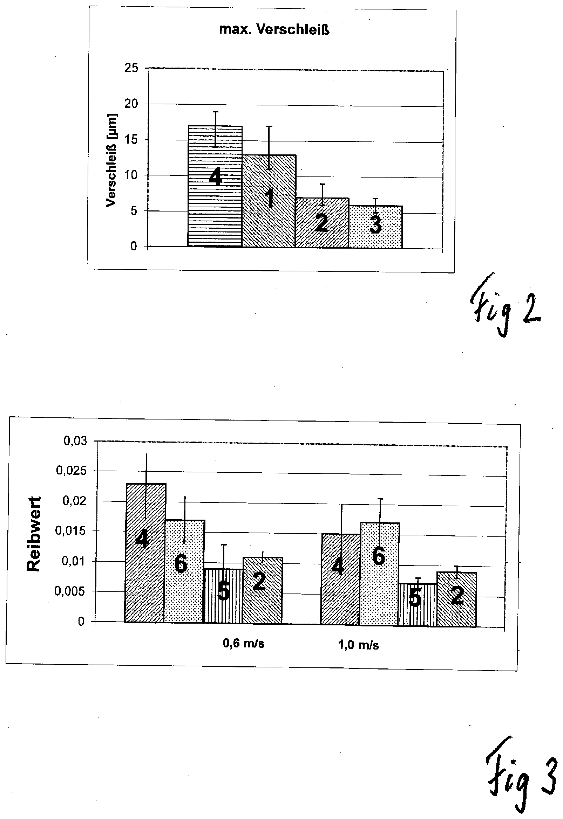

Nach dem Durchlaufen des Tests mit allen Stufen wird die Buchse vermessen und es wird der Verschleiß in µm ermittelt Der Verschleiß wird hierfür im oberen kraftbeaufschlagten Scheitel der Buchse in einem Abstand von 3 mm vom Buchsenrand beidseits bestimmt und hiervon der Mittelwert zugrunde gelegt. Aus drei Buchsen wird dann wiederum der Mittelwert ermittelt. Es ergeben sich für den Verschleiß dabei die Versuchsergebnisse gemäß Figur 2.

Als weitere Vergleichsmessung wurde der Reibwert bestimmt, und zwar anhand von Buchsen der nachfolgenden Zusammensetzung:
Beispiel 2: wie zuvor
Beispiel 5:
   90 Vol.-% PPA
   7 Vol.-% Wollastonit in nadelförmiger Modifikation
   3 Vol.-% MoS₂
Beispiel 6:
   86 Vol.-% PPA
   7,5 Vol.-% Wollastonit in nadelförmiger Modifikation
   6,5 Vol.-% Graphit
Vergleichsbeispiel 4: wie zuvor

Der Reibwert wurde wie folgt bestimmt: Unter Verwendung des vorstehend beschriebenen Lagerprüfstands mit einer Drehmomentmesswelle kann ein durch die Reibung erzeugtes Reib- oder Drehmoment M ermittelt werden. Die Länge des Hebelarms entspricht dabei dem Wellenradius r, so dass gemäß M/r die aufgrund der Reibung zu überwindende Tangentialkraft F_{T} ermittelt werden kann, die gemäß F_{T} = F_{N} · µ mit der Normalkraft F_{N}, die über den Buchsenaufnahmekörper ausgeübt wird, und mit dem Reibwert µ zusammenhängt, so dass µ berechnet werden kann.

Das Ergebnis der Vergleichsmessungen des Reibwerts bei zwei Gleitgeschwindigkeiten von 0,6 m/s und 1,0 m/s und einer Normalkraft F_{N} von 600 N zeigt Figur 3. Man erkennt deutlich das vorteilhafte Zusammenwirken von Wollastonit und Metallsulfiden als Füllstoffe.

## Patentansprüche

1. Gleitlagerverbundwerkstoff (2) mit einer Stützschicht (4), optional mit einer porösen Trägerschicht (6), insbesondere aus Bronze, und mit einem Gleitschichtmaterial (8) aus einem matrixbildenden thermoplastischen Kunststoffmaterial (10) und darin aufgenommenen Füllstoffen (12), **dadurch gekennzeichnet, dass** das thermoplastische Kunststoffmaterial (10) ausgewählt ist aus Polyphthalamid (PPA), Polyphenylensulfid (PPS), Polyimid (PI), Polyester sowie Mischungen hieraus, und das Gleitschichtmaterial (8) einen Anteil von 1 - 40 Vol.-% Wollastonit (14) als mineralischen Füllstoff und weiter einen Anteil von 0,2 - 20 Vol.% eines weiteren Füllstoffs (16) aus der Klasse der Metallsulfide umfasst.

2. Gleitlagerverbundwerkstoff nach Anspruch 1, **dadurch gekennzeichnet, dass** der Anteil von Wollastonit (14) an dem Gleitschichtmaterial (8) 1 - 30 Vol.-% und insbesondere 2 - 25 Vol.-% beträgt.

3. Gleitlagerverbundwerkstoff nach Anspruch 1 oder 2, **dadurch gekennzeichnet, dass** der weitere Füllstoff (16) aus der Klasse der Metallsulfide Molybdändisulfid (MoS₂), Wolframdisulfid (WS₂), Kupfersulfid (CuS) und/oder Zinksulfid (ZnS) umfasst.

4. Gleitlagerverbundwerkstoff nach Anspruch 1, 2 oder 3, **dadurch gekennzeichnet, dass** der Anteil des weiteren Füllstoffs (16) aus der Klasse der Metallsulfide an dem Gleitschichtmaterial (8) 0,5 - 20 Vol.-%, insbesondere 0,5 - 15 Vol.-%, insbesondere 0,5 - 10 Vol.-%, insbesondere 0,5 - 5 Vol.-% beträgt.

5. Gleitlagerverbundwerkstoff nach einem oder mehreren der vorstehenden Ansprüche, **dadurch gekennzeichnet, dass** außerdem tribologisch wirksame Füllstoffe ausgewählt aus PTFE, Graphit, keramischen Stoffen, wie insbesondere hexagonalem Bornitrid oder Titandioxid, Kohlenstofffasern, Aramidfasern, Aramidpulver, Bariumsulfat in dem Gleitschichtmaterial enthalten sind.

6. Gleitlagerverbundwerkstoff nach einem oder mehreren der vorstehenden Ansprüche, **dadurch gekennzeichnet, dass** der Anteil aller Füllstoffe einschließlich des Wollastonit-Anteils höchstens 50 Vol.-% beträgt.

7. Gleitlagerverbundwerkstoff nach einem oder mehreren der vorstehenden Ansprüche, **dadurch gekennzeichnet, dass** das thermoplastische Kunststoffmaterial (10) überwiegend von PPA gebildet ist, dessen Anteil an dem thermoplastischen Kunststoffmaterial insbesondere wenigstens 50 Vol.-%, insbesondere wenigstens 60 Vol.-%, insbesondere wenigstens 70 Vol.-% und weiter insbesondere wenigstens 80 Vol.-% beträgt.

8. Gleitlagerverbundwerkstoff nach einem oder mehreren der vorstehenden Ansprüche, **dadurch gekennzeichnet, dass** das Gleitschichtmaterial (8) PPA und WS₂ oder MoS₂ umfasst, insbesondere 70 - 94 Vol.-% PPA, 5 - 25 Vol.-% Wollastonit und 0,5 - 10 Vol.-% WS₂ oder MoS₂ umfasst.

9. Gleitlagerverbundwerkstoff nach einem oder mehreren der vorstehenden Ansprüche, **dadurch gekennzeichnet, dass** der Wollastonit (14) zu mehr als der Hälfte, insbesondere zu wenigstens 60 Vol.-%, insbesondere zu wenigstens 70 Vol.-% und weiter insbesondere zu wenigstens 80 Vol.-% seines Anteils in nadelförmiger Modifikation enthalten ist.

10. Gleitlager, hergestellt aus einem Gleitlagerverbundwerkstoff (2) nach einem oder mehreren der vorstehenden Ansprüche.

## Claims

1. Plain bearing composite (2) with a support layer (4), optionally with a porous carrier layer (6), consisting in particular of bronze, and with a sliding layer material (8) consisting of a matrix-forming thermoplastic material (10) and a filler substance (12) included in it,
**characterised in that**
the thermoplastic material (10) is selected from polyphthalamide (PPA), polyphenylene sulphide (PPS), polyimide (PI), polyester and mixtures thereof, and the sliding layer material (8) comprises a proportion of 1 - 40 % v/v of wollastonite (14) as a mineral filler substance and additionally a proportion of 0.2 - 20 % v/v of a further filler substance (16) from the class of metal sulphides.

2. Plain bearing composite according to claim 1, **characterised in that** the wollastonite (14) proportion of the sliding layer material (8) amounts to 1 - 30 % v/v and, in particular, 2 - 25 % v/v.

3. Plain bearing composite according to claim 1 or 2, **characterised in that** the further filler substance (16) from the class of metal sulphides comprises molybdenum disulphide (MoS₂), tungsten disulphide (WS₂), copper sulphide (CuS) and/or zinc sulphide (ZnS).

4. Plain bearing composite according to claim 1, 2 or 3, **characterised in that** the proportion of the further filler substance (16) from the class of metal sulphides in the sliding layer material (8) amounts to 0.5 - 20 % v/v, in particular, 0.5 - 15 % v/v, in particular, 0.5 - 10 % v/v, in particular 0.5 - 5 % v/v.

5. Plain bearing composite according to one or more of the preceding claims, **characterised in that**, furthermore, tribologically-acting filler substances, selected from PTFE, graphite, ceramic substances such as, in particular, hexagonal boron nitride or titanium dioxide, carbon fibres, aramid fibres, aramid powder, barium sulphate, are contained in the sliding layer material.

6. Plain bearing composite according to one or more of the preceding claims, **characterised in that** the proportion of all filler substances including the wollastonite proportion amounts to a maximum of 50 % v/v.

7. Plain bearing composite according to one or more of the preceding claims, **characterised in that** the thermoplastic material (10) is formed predominantly from PPA whose proportion of the thermoplastic material amounts, in particular, to at least 50 % v/v, in particular at least 60 % v/v, in particular at least 70 % v/v and, furthermore, particularly at least 80 % v/v.

8. Plain bearing composite according to one or more of the preceding claims, **characterised in that** the sliding layer material (8) comprises PPA and WS₂ or MoS₂, in particular 70 - 94 % v/v of PPA, 5 - 25 % v/v of wollastonite and 0.5 - 10 % v/v of WS₂ or MoS₂.

9. Plain bearing composite according to one or more of the preceding claims, **characterised in that** more than a half, in particular at least 60 % v/v, in particular at least 70 % v/v and, furthermore, particularly at least 80 % v/v of the proportion of wollastonite (14) is contained in the form of a needle-shaped modification.

10. Plain bearing, produced from a plain bearing composite (2) according to one or more of the preceding claims.

## Revendications

1. Matériau composite de palier à glissement (2) comprenant une couche d'appui (4), facultativement avec une couche de support poreuse (6), en particulier en bronze, et avec un matériau de couche de glissement (8) constitué d'une matière plastique thermoplastique formant matrice (10) et de charges (12) y étant reçues, **caractérisé en ce que** la matière plastique thermoplastique (10) est choisie parmi le polyphtalamide (PPA), le polysulfure de phénylène (PPS), le polyimide (PI), le polyester et des mélanges de ceux-ci, et la couche de glissement (8) contient de 1 à 40 % en volume de wollastonite (14) en tant que charge minérale, et comprend en outre une proportion de 0,2 à 20 % en volume d'une charge supplémentaire (16) de la classe des sulfures métalliques.

2. Matériau composite de palier à glissement selon la revendication 1, **caractérisé en ce que** la proportion de wollastonite (14) par rapport au matériau de couche de glissement (8) est de 1 à 30 % en volume et en particulier de 2 à 25 % en volume.

3. Matériau composite de palier à glissement selon la revendication 1 ou 2, **caractérisé en ce que** la charge supplémentaire (16) de la classe des sulfures métalliques présente du bisulfure de molybdène (MoS₂), du bisulfure de tungstène (WS₂), du sulfure de cuivre (CuS) et/ou du sulfure de zinc (ZnS).

4. Matériau composite de palier à glissement selon la revendication 1, 2 ou 3, **caractérisé en ce que** la proportion de la charge supplémentaire (16) de la classe des sulfures métalliques par rapport au matériau de couche de glissement (8) est de 0,5 à 20 % en volume, en particulier de 0,5 à 10 % en volume, en particulier de 0,5 à 5 % en volume.

5. Matériau composite de palier à glissement selon une ou plusieurs des revendications précédentes, **caractérisé en ce que** le matériau de couche de glissement contient également des charges tribologiquement actives choisies parmi du PTFE, du graphite, des matières de céramique, en particulier du nitrure de bore hexagonal ou du dioxyde de titane, des fibres de carbone, des fibres d'aramide, de la poudre d'aramide et du sulfate de baryum.

6. Matériau composite de palier à glissement selon une ou plusieurs des revendications précédentes, **caractérisé en ce que** la proportion de toutes les charges, y compris la teneur en wollastonite, est d'au plus 50 % en volume.

7. Matériau composite de palier à glissement selon une ou plusieurs des revendications précédentes, **caractérisé en ce que** la matière plastique thermoplastique (10) est formé principalement de PPA, dont la proportion de matière plastique thermoplastique est en particulier d'au moins 50% en volume, en particulier d'au moins 70 % en volume, et plus particulièrement d'au moins 80 % en volume.

8. Matériau composite de palier à glissement selon une ou plusieurs des revendications précédentes, **caractérisé en ce que** le matériau de couche de glissement (8) comprend du PPA et du WS₂ ou du MoS₂, en particulier de 70 à 94 % en volume de PPA, de 5 à 25 % en volume de wollastonite et de 0,5 à 10% en volume de WS₂ ou de MoS₂.

9. Matériau composite de palier à glissement selon une ou plusieurs des revendications précédentes, **caractérisé en ce que** la wollastonite (14) contient plus de la moitié, en particulier au moins 60 % en volume, en particulier au moins 70 % en volume et plus particulièrement au moins 80 % en volume de son contenu en modification aciculaire.

10. Palier à glissement constitué d'un matériau composite de palier à glissement (2) selon une ou plusieurs des revendications précédentes.
